# EUROPEAN PATENT APPLICATION

(11) **EP 4 516 830 A1**
(43) Date of publication of application: **05.03.2025**
(21) Application number: 23315335.2
(22) Date of filing: 01.09.2023
(51) Int. Cl.: C08G 18/22, C08G 18/32, C08G 18/48, C08G 18/66, C08G 18/79, C08K 3/013, C08K 3/22, C08K 3/34, C08L 75/08, C08L 75/12, C09D 175/08, C09D 175/12, C09J 175/08, C09J 175/12, H01M 10/613, H01M 10/653, C08G 18/71

(54) **TWO-COMPONENT THERMALLY CONDUCTIVE COMPOSITION**

(71) Applicant: Bostik SA, 92700 Colombes (FR)
(72) Inventor: SANZ, Federico, 60280 Venette (FR); HOLLE, Sophie, 60280 Venette (FR); OLEJNIK, Nicolas, 60280 Venette (FR); MAYER, Christoph, 60280 Venette (FR); STÖßER, Benjamin, 76307 Karlsbad (DE)
(74) Representative: Arkema Patent

(57) **Abstract**

The invention relates to a two-component thermally conductive composition comprising:
- a component A comprising:
∘ at least one polyol P having a functionality of at least 4, and
∘ at least one thermally conductive filler; and

- a component B comprising:
∘ at least one polyisocyanate, and
∘ at least one thermally conductive filler;

wherein the at least one thermally conductive filler in each of components A and B is selected from metal silicates, metal oxides, metal hydroxides, metal and metalloid nitrides, metal and metalloid carbides, metallic fillers, graphites, and mixtures thereof.

The invention also relates to the use of the composition according to the invention.

Furthermore, the invention relates to a method for bonding substrates implementing the composition according to the invention.

Finally, the invention relates to an article comprising the composition according to the invention.

## Description

### TECHNICAL FIELD

The present invention relates to a two-component thermally conductive composition and its use, a method for bonding substrates and an article.

### TECHNICAL BACKGROUND

Two-component polyurethane-type compositions are widely used as adhesives for the manufacture of various assemblies. These two-component compositions comprise:
- a -NCO component comprising chemical entities carrying isocyanate (i.e.-NCO) groups, and
- an -OH component comprising chemical entities carrying hydroxyl (i.e. - OH) groups.

After mixing these two components, the isocyanate groups of the -NCO component react with the hydroxyl groups of the -OH component, according to a reaction referred to as crosslinking, to form a polyurethane which exists in the form of a three-dimensional network comprising urethane groups, providing the cohesion of the adhesive between the substrates of the assembly.

Some applications, in particular assemblies intended for the manufacture of batteries, require the composition to have specific properties, in particular in terms of thermal conductivity. Indeed, the recharging of a battery generally being accompanied by an increase in temperature, it is important to limit said increase as much as possible, which is likely to degrade certain electronic circuits or even to reduce the life of the battery. It is therefore important for the composition to have sufficient thermal conductivity to overcome these problems.

On an industrial scale, in particular for battery assemblies, the assemblies are manufactured on assembly lines. Generally, one person/robot applies the composition on a substrate, then another person/robot contacts the composition with another substrate and leaves the composition to cure before storing the assembly out of the assembly line. Therefore, a long time may pass after the composition is applied on a first substrate and before it is contacted with another substrate.

Thus, there is a need to provide a thermally conductive composition having a long open time (time between the start of the mixing of the two components of the composition and the start of the curing of the composition).

However, the composition should be sufficiently cured in order to remove the assembly of the assembly line, and store it elsewhere, shortly after the end of the open time. The further time needed at the end of the open time to comfortably manipulate the assembly without breaking it is called the setting time interval.

Therefore, there is a need to provide a thermally conductive composition having a short setting time interval.

Furthermore, there is a need for a thermally conductive composition which can remain stable during storing, even at elevated temperatures such as 50°C and/or even when the composition comprises a low diisocyanate monomer content (e.g. diisocyanate having a molar mass of less than 300 g/mol). The latter is advantageous because diisocyanate monomers are considered to be harmful for health.

it has now been found that one or more of these needs can be addressed by the composition described below.

### SUMMARY OF THE INVENTION

The invention relates to a two-component thermally conductive composition comprising:
- a component A comprising:
   ∘ at least one polyol P having a functionality of at least 4, and
   ∘ at least one thermally conductive filler; and
- a component B comprising:
   ∘ at least one polyisocyanate, and
   ∘ at least one thermally conductive filler;
wherein the at least one thermally conductive filler in each of components A and B is selected from metal silicates, metal oxides, metal hydroxides, metal and metalloid nitrides, metal and metalloid carbides, metallic fillers, graphites, and mixtures thereof.

The invention also relates to the use of the composition according to the invention as an adhesive.

Furthermore, the invention relates to a method for bonding substrates comprising the steps of:
- coating, on at least one surface of the substrates, of the composition according to the invention, then
- contacting the substrates.

Finally, the invention relates to an article comprising the composition according to the invention, said composition bonding at least two substrates of said article.

The present invention makes it possible to address the needs mentioned above. In particular, the composition according to the invention surprisingly has both a long open time and a short setting time, while being stable after storage at elevated temperatures (e.g. 50°C), even when its diisocyanate monomer content is low.

### DESCRIPTION OF THE INVENTION

### Composition

### Polyol P

The component A comprises at least one polyol P having a functionality of at least 4, i.e. an organic compound having at least 4 hydroxy (-OH) groups.

Advantageously, the polyol P has a functionality of 4 to 10, preferably 4 to 6, in particular equal to 4 (tetrol).

The at least one polyol P may be selected from polyester polyols, polyether polyols, and mixtures thereof, preferably from polyether polyols.

By "polyester polyol", it is intended a polyol comprising at least two ester groups, and which may also comprise other functional group(s).

As examples of polyester polyols, mention may be made of polyester polyols obtained by esterifying a polyol having a functionality of at least 4, in particular equal to 4 such as pentaerythritol or pentane-1,2,4,5-tetrol, preferably pentaerythritol. Advantageously, esterification is carried out with a lactone, a cyclic diester (such as glycolide, lactide) and/or a hydroxycarboxylic acid (i.e. a carboxylic acid comprising one or more hydroxy groups), preferably with a lactone such as caprolactone or gamma-butyrolactone, more preferably caprolactone.

According to an embodiment, the polyester polyol is a polycaprolactone tetrol obtained from pentaerythritol.

By "polyether polyol", it is intended a polyol comprising at least two ether groups, and which may also comprise other functional group(s) such as tertiary amine(s).

The polyether polyol may be polyol-initiated or amine-initiated, i.e. may be initiated from a polyol comprising at least 4 hydroxy groups, in particular 4 hydroxy groups, or from an amine comprising at least 4 hydrogen atoms (each forming part of a hydroxy group or an amine group, preferably an amine group), in particular 4 hydrogen atoms. Preferably, the polyether polyol is amine-initiated, more preferably the polyether polyol is amine-initiated with an amine comprising at least two primary amine groups, in particular a diamine comprising two primary amine groups.

For example, the polyether polyol may be polyol-initiated with pentaerythritol, sorbitol and/or pentane-1,2,4,5-tetrol, preferably pentaerythritol.

For example, the polyether polyol may be amine-initiated with ethylene diamine, 1,3-diaminopropane, 1,3-diaminobutane, 1,4-diaminobutane, N,N-bis(3-aminopropyl)methylamine, neopentyldiamine, 4,4'-methylenebis(cyclohexylamine) and/or diethylenetriamine, preferably ethylene diamine, 1,3-diaminopropane, 1,3-diaminobutane and/or 1,4-diaminobutane, more preferably ethylene diamine.

Advantageously, the polyether polyol is ethoxylated, propoxylated and/or butoxylated (random or block), preferably ethoxylated and/or propoxylated, more preferably propoxylated.

According to a preferred embodiment, the polyether polyol is an ethoxylated and/or propoxylated diamine, said diamine comprising two primary amine groups. Preferably, the diamine is ethylene diamine, 1,3-diaminopropane, 1,3-diaminobutane or 1,4-diaminobutane, more preferably ethylene diamine. In particular, the polyether polyol is propoxylated ethylene diamine.

The polyol P may have an OH number comprised between 200 and 2500 mg of KOH per gram of polyol P, preferably between 250 and 1250 mg KOH/g, more preferably between 300 and 700 mg KOH/g.

in the context of the invention, the ranges of values are understood to be inclusive. For example, the range "between 0% and 25%" includes, in particular, the values 0% and 25%.

The OH number may be determined according to ISO 14900:2017.

The polyol P may have a number average molecular weight comprised between 200 g/mol and 2000 g/mol, preferably between 300 g/mol and 1100 g/mol, more preferably between 350 g/mol and 700 g/mol.

The number average molecular weight (Mn) of the polyol P may be determined by calculation as follows: Mn=(f_{OH}*56100)/I_{OH}, wherein Mn is in g/mol, f_{OH} is the functionality of the polyol P and I_{OH} is the OH number of the polyol P in mg KOH/g.

The total content of the at least one polyol P in component A may be comprised between 3 % and 15 % by weight with respect to the total weight of component A, preferably between 4 % and 12 % by weight.

### Polyol P'

The component A may further comprise at least one polyol P', which is different from the polyol P. In particular, the polyol P' has a functionality (hydroxy groups) comprised between 2 and 3, preferably of 2.

The at least one polyol P' may be selected from polyester polyols, polyether polyols, polyene polyols, and mixtures thereof, preferably from polyether polyols.

The polyester polyols include those which may be obtained by reacting at least one polyol with at least one polycarboxylic acid or an ester-forming derivative thereof, which is able to form an ester bond after reacting with a hydroxy group (such as an anhydride or acyl halide thereof).

The polycarboxylic acid may be selected from succinic acid, glutaric acid, adipic acid, pimelic acid, suberic acid, azelaic acid, sebacic acid, 1,12-dodecanedioic acid, 1,18-octadecanedioic acid, fumaric acid or dimer thereof, maleic acid or dimer thereof, 1,4-cyclohexanedicarboxylic acid, isophthalic acid, phthalic acid, terephthalic acid, ester-forming derivatives thereof, and mixtures thereof. Preferably, the polycarboxylic acid is selected from succinic acid, adipic acid, azelaic acid, sebacic acid, 1,12-dodecanedioic acid, isophthalic acid, phthalic acid, terephthalic acid, ester-forming derivatives thereof and mixtures thereof.

The polyol may be selected from ethylene glycol, diethylene glycol, triethylene glycol, tetraethylene glycol, 1,2-propanediol (propylene glycol), 1,3-propanediol, trimethylolpropane, dipropylene glycol, tripropylene glycol, tetrapropylene glycol, 1,2-butanediol, 1,3-butanediol, 1,4-butanediol, 1,6-hexanediol, 3-ethyl-2-methyl-1,5-pentanediol, 2-ethyl-3-propyl-1,5-pentanediol, 2,4-dimethyl-3-ethyl-1,5-pentanediol, 2-ethyl-4-methyl-3-propyl-1,5-pentadiol, 2,3-diethyl-4-methyl-1,5-pentanediol, 3-ethyl-2,2,4-trimethyl-1,5-pentadiol, 2,2-dimethyl-4-ethyl-3-propyl-1,5-pentanediol, 2-methyl-2-propyl-1,5-pentanediol, 2,4-dimethyl-3-ethyl-2-propyl-1,5-pentanediol, 2,3-dipropyl-4-ethyl-2-methyl-1,5-pentanediol, 2-butyl-2-ethyl-1,5-pentanediol, 2-butyl-2,3-diethyl-4-methyl-1,5-pentanediol, 2-butyl-2,4-diethyl-3-propyl-1,5-pentanediol, 3-butyl-2-propyl-1,5-pentanediol, 2-methyl-1,5-pentanediol, 3-methyl-1,5-pentanediol, 2,2-dimethyl-1,3-pentanediol, 2,2-dimethyl-1,5-pentanediol, 3,3-dimethyl-1,5-pentanediol, 2,3-dimethyl-1,5-pentanediol, 2,2-dimethyl-1,3-propanediol (neopentylglycol), 2,2-diethyl-1,3-propanediol, 2-methyl-2-propyl-1,3-propanediol, 2-butyl-2-ethyl-1,3-propanediol, 2-methyl-1,3-propanediol, 2-benzyloxy-1,3-propanediol, 2,2-dibenzyl-1,3-propanediol, 2,2-dibutyl-1,3-propanediol, 2,2-diisobutyl-1,3-propanediol, 2,4-diethyl-1,5-pentanediol, 2-ethyl-1,6-hexanediol, 2,5-dimethyl-1,6-hexanediol, 5-methyl-2-(1-methylethyl)-1,3-hexanediol, 1,4-dimethyl-1,4-butanediol, 1,5-hexanediol, 3-methyl-1,6-hexanediol, 3-tert-butyl-1,6-hexanediol, 1,3-heptanediol, 1,2-octanediol, 1,3-octanediol, 2,2,7,7-tetramethyl-1,8-octanediol, 2-methyl-1,8-octanediol, 2,6-dimethyl-1,8-octanediol, 1,7-octanediol, 4,4,5,5-tetramethyl-3,6-dioxa-1,8-octanediol, 2,2,8,8-tetramethyl-1,9-nonanediol, 1,2-nonanediol, 2,8-dimethyl-1,9-nonanediol, 1,5-nonanediol, 2,9-dimethyl-2,9-dipropyl-1,10-decanediol, 2,9-dibutyl-2,9-dimethyl-1,10-decanediol, 2,9-dimethyl-2,9-dipropyl-1,10-decanediol, 2,9-diethyl-2,9-dimethyl-1,10-decanediol, 2,2,9,9-tetramethyl-1,10-decanediol, 2-nonyl-1,10-decanediol, 1,9-decanediol, 2,2,6,6,10,10-hexamethyl-4,8-dioxa-1,11-undecanediol, 2-octyl-1,11-undecanediol, 2,10-diethyl-2,10-dimethyl-1,11-undecanediol, 2,2,10,10-tetramethyl-1,11-undecanediol, 1-phenyl-1,11-undecanediol, 1,2-undecanediol, 1,2-dodecanediol, 2,11-dodecanediol, 2,11-diethyl-2,11-dimethyl-1,12-dodecanediol, 2,11-dimethyl-2,11-dipropyl-1,12-dodecanediol, 2,11-dibutyl-2,11-dimethyl-1,12-dodecanediol, 2,2,11,11-tetramethyl-1,12-dodecanediol, 1,11-dodecanediol, 11-methyl-1,7-dodecanediol, 1,4-dodecanediol, 1,3-dodecanediol, 1,10-dodecanediol, 2,11-dimethyl-2,11-dodecanediol, 1,5-dodecanediol, 6,7-dodecanediol, 2,2-bis(4-hydroxyphenyl)propane (bisphenol A), 1,4-cyclohexanediol, 1,4-cyclohexanedimethanol, and mixtures thereof. Preferably, the polyol is selected from ethylene glycol, diethylene glycol, triethylene glycol, propylene glycol, 1,3-propanediol, trimethylolpropane, dipropylene glycol, 1,2-butanediol, 1,3-butanediol, 1,4-butanediol, 1,6-hexanediol, neopentylglycol, bisphenol A, 1,4-cyclohexanediol, 1,4-cyclohexanedimethanol and mixtures thereof.

The polyester polyol may also be obtained by polymerizing at least one hydroxycarboxylic acid, lactone and/or cyclic diester (such as glycolide, lactide).

Examples of polyester polyols are castor oil (or ricinoleic acid triglyceride), polycarbonate diol, polycaprolactone, ester of adipic acid and hexanediol, ester of adipic acid, diethylene glycol and monoethylene glycol, ester of ethylene glycol and dodecanedioic acid, 3-methyl-1,5-pentanediol adipate.

According to a first embodiment, the polyether polyol may be a polyoxyalkylene (homo- or copolymer). The alkylene portion of the polyoxyalkylene may comprise 1 to 4 carbon atoms, preferably 2 and/or 3 carbon atoms (i.e. polyethylene glycol, polypropylene glycol or polyethylene glycol-propylene glycol)). In particular, the polyether polyol may be polypropylene glycol.

According to a second embodiment, the polyether polyol may be polyol-initiated or amine-initiated, i.e. may be initiated from a diol or a triol, in particular a diol, or from amines comprising 2 or 3 hydrogen atoms (each forming part of a hydroxy group or an amine group), in particular 2 hydrogen atoms. Preferably, the polyether polyol is polyol-initiated, more preferably the polyether polyol is diol-initiated. It is understood that the part coming from the diol or triol (used to initiate the polyether polyol) is not repeated twice (or more) in the molecular structure of the polyether polyol.

The polyether polyol may be polyol-initiated with an aliphatic polyol or with a polyol comprising one or more aromatic rings, preferably a polyol comprising one or more aromatic rings.

For example, the polyether polyol may be polyol-initiated with a polyol initiator selected from trimethylolethane, trimethylolpropane, glycerol, triethanolamine, cyclohexanedimethanol, 4,4'-isopropylidenediphenol, bis-(4-hydroxy-3,5-difluorophenyl)methane, 1,1-bis-(4-hydroxyphenyl)ethane, 2,2-bis-(4-hydroxy-3-methylphenyl)propane (CAS : 79-97-0), 2,2-bis-(4-hydroxy-3,5-dichlorophenyl)propane (CAS: 79-95-8), 2,2-bis(4-hydroxyphenyl)butane, 4,4'-methylenediphenol, 2,4'-methylenediphenol and 2,2'-methylenediphenol. Preferably, the polyether polyol is polyol-initiated with 4,4'-isopropylidenediphenol, 1,1-bis-(4-hydroxyphenyl)ethane, 2,2-bis-(4-hydroxy-3-methylphenyl)propane, 2,2-bis(4-hydroxyphenyl)butane, 4,4'-methylenediphenol, 2,4'-methylenediphenol or 2,2'-methylenediphenol, in particular 4,4'-isopropylidenediphenol.

For example, the polyether polyol may be amine-initiated with N,N'-dimethylethylenediamine, N,N'-diethylethylenediamine, 3-dimethylaminopropylamine, N-methyl-1,2-ethanediamine or N-methyl-1,3-propanediamine, preferably with N,N'-dimethylethylenediamine or N,N'-diethylethylenediamine.

Advantageously, the polyether polyol of this second embodiment is ethoxylated, propoxylated and/or butoxylated (random or block), preferably ethoxylated and/or propoxylated, more preferably propoxylated.

In particular, the polyether polyol is an ethoxylated and/or propoxylated diol; said diol is the polyol initiator (which is different from propylene glycol and ethylene glycol). The diol is advantageously one of the diols disclosed above for the polyol initiator. Preferably, the diol is 4,4'-isopropylidenediphenol, 1,1-bis-(4-hydroxyphenyl)ethane, 2,2-bis-(4-hydroxy-3-methylphenyl)propane, 2,2-bis(4-hydroxyphenyl)butane, 4,4'-methylenediphenol, 2,4'-methylenediphenol or 2,2'-methylenediphenol, more preferably 4,4'-isopropylidenediphenol. In particular, the polyether polyol is propoxylated 4,4'-isopropylidenediphenol.

According to a preferred embodiment, the at least one polyol P' comprises (or consists of) a mixture of at least one polyether polyol according to the above first embodiment and at least one polyether polyol according to the above second embodiment. Preferably, the at least one polyol P' comprises (or consists of) a mixture of at least one polyether polyol selected from polyethylene glycol, polypropylene glycol and polyethylene glycol-propylene glycol), and at least one polyether polyol selected from ethoxylated and/or propoxylated diols.

By "polyene polyols", it is intended a polyol comprising at least two carbon-carbon double bonds, and which may also comprise other functional group(s).

As examples of polyene polyols, mention may be made of polyisoprene, polybutadiene, polypentadiene, butadiene isoprene copolymer and/or isobutene isoprene copolymer, which are optionally hydrogenated or epoxidized.

The polyol P' may have an OH number comprised between 20 and 700 mg of KOH per gram of polyol P', preferably between 50 and 500 mg KOH/g.

The OH number may be determined according to ISO 14900:2017.

The polyol P' may have a number average molecular weight comprised between 200 g/mol and 5000 g/mol, preferably between 300 g/mol and 3000 g/mol.

The number average molecular weight (Mn) of the polyol P' may be determined by calculation as follows: Mn=(f_{OH}*56100)/I_{OH}, wherein Mn is in g/mol, f_{OH} is the functionality of the polyol P' and I_{OH} is the OH number of the polyol P in mg KOH/g.

When at least one polyol P' is present in component A, the total content of the at least one polyol P' in component A may be comprised between 3 % and 15 % by weight with respect to the total weight of component A, preferably between 4 % and 12 % by weight.

### Polyisocyanate

The component B comprises at least one polyisocyanate (i.e. a compound having at least two isocyanate (-NCO) groups), preferably at least one polyisocyanate comprising at least three isocyanate groups.

The at least one polyisocyanate may be monomeric and/or polymeric. For example, the at least one polyisocyanate may comprise a monomeric isocyanurate and a polymeric isocyanurate (i.e. comprising at least two isocyanurate groups).

The at least one polyisocyanate may be selected from aliphatic polyisocyanates, aromatic polyisocyanates, and mixtures thereof, preferably from aliphatic polyisocyanates.

In the context of the present invention, aliphatic polyisocyanates are polyisocyanates wherein no nitrogen atom of the -NCO groups is directly linked by a covalent bond to a carbon atom being part of an aromatic hydrocarbon cycle. For example, m-xylylene diisocyanate (m-XDI) is an aliphatic polyisocyanate according to the invention. Furthermore, the aliphatic polyisocyanate does not comprise carbamate groups. Therefore, aromatic polyisocyanates are polyisocyanates wherein at least one nitrogen atom of the -NCO groups is directly linked by a covalent bond to a carbon atom being part of an aromatic hydrocarbon cycle.

As examples of aliphatic polyisocyanates, mention may be made of isophorone diisocyanate, dicyclohexylmethane 4,4'-diisocyanate, 1,4-cyclohexylene diisocyanate, 1,2-cyclohexylene diisocyanate, 2,4-diisocyanato-1-methylcyclohexane, 1,3-diisocyanato-2-methylcyclohexane, meta-xylylene diisocyanate, hydrogenated meta-xylylene diisocyanate, tetramethylxylene diisocyanate, 1,2-ethylene diisocyanate, 1,3-propylene diisocyanate, 1,4-butylene diisocyanate, 1,5-pentamethylene diisocyanate, 1,6-hexamethylene diisocyanate, 1,7-heptamethylene diisocyanate, 1,8-octamethylene diisocyanate, derivatives thereof (e.g. biurets, isocyanurates and/or adducts with polyol, being monomeric and/or polymeric), and mixtures thereof. Preferably, the aliphatic polyisocyanate is selected from isophorone diisocyanate, meta-xylylene diisocyanate, hydrogenated meta-xylylene diisocyanate, 1,5-pentamethylene diisocyanate, 1,6-hexamethylene diisocyanate, derivatives thereof (e.g. biurets, isocyanurates and/or adducts with polyol, being monomeric and/or polymeric), and mixtures thereof, more preferably from 1,5-pentamethylene diisocyanate, 1,6-hexamethylene diisocyanate, derivatives thereof (e.g. biurets, isocyanurates and/or adducts with polyol, being monomeric and/or polymeric), and mixtures thereof.

As examples of aromatic polyisocyanates, mention may be made of toluene diisocyanate, diphenylmethane diisocyanate, diphenylpropane diisocyanate, naphthalene diisocyanate, phenylene diisocyanate, derivatives thereof (e.g. biurets, isocyanurates and/or adducts with polyol, being monomeric and/or polymeric), and mixtures thereof. Preferably, the aromatic polyisocyanate is selected from toluene diisocyanate, diphenylmethane diisocyanate, derivatives thereof (e.g. biurets, isocyanurates and/or adducts with polyol, being monomeric and/or polymeric), and mixtures thereof.

Preferably, the at least one polyisocyanate is selected from biurets, isocyanurates, adducts with polyol, and mixtures thereof, more preferably from isocyanurates, the at least one polyisocyanate being monomeric and/or polymeric.

According to a preferred embodiment, the at least one polyisocyanate is selected from 1,6-hexamethylene diisocyanate isocyanurate, isophorone diisocyanate isocyanurate, 1,5-pentamethylene diisocyanate isocyanurate, meta-xylylene diisocyanate isocyanurate, hydrogenated meta-xylylene diisocyanate isocyanurate, 1,6-hexamethylene diisocyanate biuret, adducts of meta-xylylene diisocyanate and glycerol, trimethylolpropane or trimethylolethane, and mixtures thereof, preferably from 1,6-hexamethylene diisocyanate isocyanurate, isophorone diisocyanate isocyanurate, 1,5-pentamethylene diisocyanate isocyanurate, meta-xylylene diisocyanate isocyanurate, hydrogenated meta-xylylene diisocyanate isocyanurate, and mixtures thereof, in particular 1,6-hexamethylene diisocyanate isocyanurate. As mentioned above, said polyisocyanates may be monomeric and/or polymeric.

The total content of the at least one polyisocyanate in component B may be comprised between 5 % and 25 % by weight with respect to the total weight of component B, preferably between 10 % and 20 % by weight.

### Thermally conductive filler

The composition according to the invention comprises at least one thermally conductive filler in each of components A and B. The thermally conductive fillers are used to impart a good thermal conductivity to the composition according to the invention (advantageously comprised between 1.0 and 3 W/mK).

The at least one thermally conductive filler in each of components A and B may be identical or different.

At least one of the thermally conductive fillers in the composition according to the invention may be a surface treated thermally conductive filler. Preferably, at least one of the thermally conductive fillers in the composition is a surface treated thermally conductive filler and at least one of the thermally conductive fillers in the composition is a non-surface treated thermally conductive filler.

Advantageously, the surface treatment is a hydrophobic surface treatment. For example, the surface treatment may be performed with an alkylalkoxysilane, in particular an alkyltrialkoxysilane such as an alkyltrimethoxysilane and/or alkyltriethoxysilane. By "alkylalkoxysilane", it is intended a silane comprising at least one alkoxy group and at least one alkyl group, bonded to a silicon atom. Preferably, the surface treated thermally conductive filler does not have isocyanate-reactive groups, i.e. it does not react with isocyanate compounds.

The at least one thermally conductive filler (surface treated or not) in each of components A and B is selected from metal silicates, metal oxides, metal hydroxides, metal and metalloid nitrides, metal and metalloid carbides, metallic fillers, graphites, and mixtures thereof, preferably from metal silicates, metal oxides, metal hydroxides, metal and metalloid nitrides, and mixtures thereof, more preferably from metal oxides, metal hydroxides, and mixtures thereof.

Examples of metal silicates are tin, indium, antimony, aluminum, titanium, iron, magnesium and/or zinc silicates, preferably aluminum silicates.

Examples of metal oxides are tin, indium, antimony, titanium, iron, zinc, magnesium and/or aluminum oxides, preferably zinc, magnesium and/or aluminum oxides, more preferably aluminum oxide (i.e. Al₂O₃).

Examples of metal hydroxides are tin, indium, antimony, titanium, iron, zinc, magnesium and/or aluminum hydroxides, preferably magnesium and/or aluminum hydroxides, more preferably aluminum hydroxide (i.e. Al(OH)₃).

Examples of metal and metalloid nitrides are tin, indium, antimony, titanium, iron, magnesium, zinc, silicon, aluminum and/or boron nitrides, preferably aluminum and/or boron nitrides.

Examples of metal and metalloid carbides are silicon and/or tungsten carbides.

Examples of metallic fillers are silver, copper and/or aluminum.

Advantageously, the at least one thermally conductive filler (surface treated or not) in each of components A and B is selected from aluminum silicates, alumina, aluminum hydroxide, aluminum nitride, boron nitride, zinc oxide, magnesium oxide, and mixtures thereof, more preferably from alumina, aluminum hydroxide, and mixtures thereof, in particular from mixtures of alumina and aluminum hydroxide.

According to an embodiment, the composition according to the invention comprises at least one surface treated thermally conductive filler selected from metal hydroxides (in particular aluminum hydroxide) and at least one non-surface treated thermally conductive filler selected from metal oxides, metal hydroxides, and mixtures thereof (in particular alumina, aluminum hydroxide, and mixtures thereof).

Advantageously, the at least one thermally conductive filler in each of components A and B is electrically insulating. By "electrically insulating", it is intended in particular an electrical conductivity less than or equal to 0.1 S/m at 23°C, preferably less than or equal to 0.01 S/m at 23°C. The electrical conductivity may be measured according to the ISO 787-14 (2002) standard.

The average particle size of the thermally conductive filler may be comprised between 0.1 µm and 60 µm, preferably between 5 µm and 50 µm.

The average particle size advantageously corresponds to the particle size Dv50, i.e. the maximum size of 50 % of the smallest particles by volume, and may be measured by laser diffraction on a MALVERN type device (for example according to ISO 13320).

Unless otherwise stated, standards mentioned throughout the present application are those in effect on the date the application is filed.

The total content of the at least one thermally conductive filler in component A may be comprised between 55 % and 94 % by weight with respect to the total weight of component A, preferably between 65 % and 90 % by weight, more preferably between 75 % and 85 % by weight.

The total content of the at least one thermally conductive filler in component B may be comprised between 55 % and 94 % by weight with respect to the total weight of component B, preferably between 65 % and 90 % by weight, more preferably between 75 % and 85 % by weight.

The total content of the at least one thermally conductive filler in each of components A and B may be comprised between 55 % and 94 % by weight with respect to the total weight of each of components A and B respectively, preferably between 65 % and 90 % by weight, more preferably between 75 % and 85 % by weight.

### Catalyst

Advantageously, the component A comprises a crosslinking catalyst.

The crosslinking catalyst may be selected from organometallic catalysts, tertiary amines, and mixtures thereof, preferably from organometallic catalysts.

The organometallic catalyst may be selected from metal alkoxides, metal carboxylates, metal coordination complexes with one or more organic ligands (e.g. acetyl acetonate), and mixtures thereof. Preferably, the metal is bismuth, zinc, titanium, zirconium and/or tin, more preferably bismuth and/or zinc.

For example, the organometallic catalyst may be selected from:
- bismuth carboxylates (acetate, neodecanoate, etc.), in particular neodecanoate,
- zinc carboxylates (acetate, neodecanoate, etc.), in particular neodecanoate,
- organic derivatives of titanium such as titanium acetyl acetonate, titanium tetrapropoxide, tetraisopropyl titanate, titanium tetrabutoxide, titanium tetraethoxide,
- organic derivatives of zirconium such as zirconium acetyl acetonate, zirconium tetrapropoxide, tetraisopropyl zirconium, zirconium tetrabutoxide, zirconium tetraethoxide,
- tin-based catalysts such as compounds derived from dioctyltin or dibutyltin (in particular dibutyltin or dioctyltin dilaurate), and
- mixtures thereof.

Preferably, the organometallic catalyst is selected from:
- bismuth carboxylates, in particular neodecanoate,
- zinc carboxylates, in particular neodecanoate,
- organic derivatives of titanium such as titanium acetyl acetonate, titanium tetrapropoxide, tetraisopropyl titanate, titanium tetrabutoxide, titanium tetraethoxide,
- organic derivatives of zirconium such as zirconium acetyl acetonate, zirconium tetrapropoxide, tetraisopropyl zirconium, zirconium tetrabutoxide, zirconium tetraethoxide, and
- mixtures thereof.

More preferably, the organometallic catalyst is selected from bismuth carboxylates, zinc carboxylates, and mixtures thereof, in particular neodecanoate.

Examples of tertiary amines are triethylamine, tributylamine, N,N-dimethylcyclohexylamine, dimethylbenzylamine, N,N'-dimethylpiperazine, N,N,N,N-tetramethylpropane-1,3-diamine, bis(2-dimethylaminoethyl) ether, 2-dimethylaminoethyl 3-dimethylaminopropyl ether, N-methylmorpholine, N-ethylmorpholine, N-(methoxyethyl)morpholine, 2,2'-dimorpholinodiethyl ether (DMDEE), bis(2,6-dimethylmorpholinoethyl) ether, bis(3,5-dimethylmorpholinoethyl) ether, N,N-dimethylphenylamine, N,N,N,N-tetramethylbutane-1,3-diamine, N,N,N,N-tetramethylpropane-1,3-diamine, N,N,N,N-tetramethylhexane-1,6-diamine, 1-methylimidazole, 2-methyl-1-vinylimidazole, 1-allylimidazole, 1-phenylimidazole, 1,2,4,5-tetramethylimidazole, pyrimidazole, 4-(dimethylamino)pyridine, 4-pyrrolidinopyridine, 4-morpholinopyridine, 4-methylpyridine, N-decyl-2-methylimidazole, N-dodecyl-2-methylimidazole, tris(dimethylaminopropyl)hexahydrotriazine, tetramethylguanidine, 1,8-diazabicyclo[5.4.0]undec-7-ene (DBU), 1,4-diazabicyclo[2.2.2]octane (DABCO), 1,5-diazabicyclo[4.3.0]non-5-ene (DBN), quinuclidine, bis(dimethylaminomethyl)phenol, 2-(2-dimethylaminoethoxy)ethanol, quinuclidinol, (hydroxymethyl)quinuclidine, in particular DABCO and/or DMDEE.

The crosslinking catalyst content in component A may be comprised between 0.01 % and 0.2 % by weight with respect to the total weight of component A, preferably between 0.03 % and 0.15 % by weight, more preferably between 0.05 % and 0.11 % by weight.

### Other additives

The composition according to the invention may further comprise one or more additives (in component A and/or B), in particular selected from plasticizers, solvents, rheological agents, pigments, adhesion promoters, moisture absorbers, UV stabilizers (or antioxidants), dispersing agents, anti-bubbling agents, and mixtures thereof, preferably from pigments, moisture absorbers, dispersing agents, anti-bubbling agents, and mixtures thereof.

Advantageously, the composition according to the invention comprises a mixture of additives selected from pigments, moisture absorbers, dispersing agents and anti-bubbling agents.

The total content of additives may be up to 10 % by weight with respect to the total weight of the composition according to the invention, preferably between 0.1 % and 5% by weight.

The plasticizer may be any plasticizer usually implemented in the field of adhesive compositions.

For example, the plasticizer may be selected from alkylphthalates (such as diisodecyl phthalate, diisononyl phthalate, diisononyl hexahydrophthalate), esters of alkylsulphonic acid and phenol (e.g. MESAMOLL^{®} by LANXESS), pentaerythritol tetravalerate, diisononyl-1,2-cyclohexane dicarboxylate, 3,3'-methylenebis(oxymethylene)]bis[heptane], dioctyl carbonate, and mixtures thereof.

The plasticizer content may be up to 8 % by weight with respect to the total weight of the composition according to the invention, preferably up to 5 % by weight.

The composition according to the invention may comprise up to 5% by weight of a solvent with respect to the total weight of said composition, preferably a solvent volatile at room temperature (temperature of the order of 23°C). The solvent can for example be chosen from ethyl acetate, petroleum ether, C6-C23 hydrocarbons, and mixtures thereof. Water and alcohols are not considered as solvents in the context of the present invention.

The rheological agent may be selected from thixotropic agents, for example from:
- PVC plastisols, corresponding in particular to a suspension of PVC in a plasticizer that is miscible with PVC, obtained in situ by heating to temperatures ranging from 60°C to 80°C. These plastisols may be those described in particular in the publication Polyurethane Sealants, Robert M. Evans, ISBN 087762-998-6,
- fumed silica,
- urea derivatives derived from the reaction of a diisocyanate monomer, preferably an aromatic diisocyanate monomer such as methylene diphenyl diisocyanate (e.g. 4,4'-MDI), with an aliphatic primary amine such as butylamine,
- waxes derived from castor oil, such as THIXCIN^{®} R sold by ELEMENTIS,
- amide waxes, preferably micronized amide waxes, such as Crayvallac^{®} SLT sold by Arkema, and
- mixtures thereof.

If waxes are implemented, they are preferably introduced in component A.

The rheological agent content may be up to 5 % by weight with respect to the total weight of the composition according to the invention, preferably up to 3 % by weight.

The pigment may be selected from organic pigments, inorganic pigments, and mixtures thereof. For example, the pigment may be selected from phthalocyanine-based pigments (such as copper phthalocyanine, halogenated copper phthalocyanine, metal-free phthalocyanine), anthraquinone-based pigments (such as 1-methylamino-4-o-tolylaminoanthranquinone, 1,4-diisopropyl aminoanthraquinone, 1,4-diaminoanthraquinone, 1,4-dibutyl-aminoanthraquinone, 1-amino-4-anilinoanthraquinone), quinacridone-based pigments, perylene-based pigments; thioindigo-based pigments, quinophthalone-based pigments, titanium dioxide, carbon black, manganese ferrite, and mixtures thereof, in particular from anthraquinone-based pigments such as 1,4-dibutyl-aminoanthraquinone.

The pigment content may be up to 1 % by weight with respect to the total weight of the composition according to the invention, preferably between 0.001% and 0.5 % by weight.

The adhesion promoter may be selected from amino alkoxysilanes (such as (3-aminopropyl)trimethoxysilane, 4-amino-3,3-dimethylbutyltrimethoxysilane, N-(2-aminoethyl)-3-aminopropyltrimethoxysilane), mercapto alkoxysilanes, epoxy alkoxysilanes (such as (3-glycidyloxypropyl)trimethoxysilane), and mixtures thereof.

The adhesion promoter content may be up to 5 % by weight with respect to the total weight of the composition according to the invention, preferably up to 2 % by weight.

The moisture absorber may be selected from monoisocyanates such as p-toluenesulfonyl isocyanate.

The moisture absorber content may be up to 3 % by weight with respect to the total weight of the composition according to the invention, preferably between 0.1% and 1.5 % by weight.

The UV stabilizer (or antioxidant) may be selected from benzotriazoles, benzophenones, hindered phenols (such as ethylenebis(oxyethylene)bis[3-(5-tert-butyl-4-hydroxy-m-tolyl)propionate], 2,2'-methylenebis(6-(tert-butyl)-4-methylphenol), 2,2'-methylenebis(6-(tert-butyl)-4-ethylphenol), 2,2'-methylenebis(4-methyl-6-cyclohexylphenol), 2,2'-methylenebis(4,6-di(tert-butyl)phenol), 4,4'-methylenebis(2,6-di(tert-butyl)phenol, octadecyl 3-(3,5-di-tert-butyl-4-hydroxyphenyl)propionate), 2,6-di (tert-butyl)-4-methylphenol), hindered amines (such as bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS No: 41556-26-7), methyl 1,2,2,6, 6-pentamethyl-4-piperidyl sebacate (CAS No: 82919-37-7), 4,4'-bis(α,α-dimethylbenzyl)diphenylamine), and mixtures thereof.

The UV stabilizer (or antioxidant) content may be up to 3 % by weight with respect to the total weight of the composition according to the invention, preferably up to 2 % by weight.

The dispersing agent may be selected from salts of polymers comprising carboxylate and/or phosphate group(s), polymer-functional trialkoxysilanes, and mixtures thereof, preferably from salts of polyethers comprising carboxylate and/or phosphate group(s), salts of polyesters comprising carboxylate and/or phosphate group(s), polyether-functional trialkoxysilanes, polyester-functional trialkoxysilanes, and mixtures thereof, more preferably from salts of polyesters comprising phosphate group(s), polyether-functional trialkoxysilanes (such as polyethylene glycol-functional trimethoxysilane), and mixtures thereof.

Advantageously, each component A and B comprises at least one dispersing agent (which may be identical or different).

The dispersing agent content may be up to 5 % by weight with respect to the total weight of the composition according to the invention, preferably between 0.5% and 3 % by weight.

Anti-bubbling agents (or anti-foaming agents) are usually used by those skilled in the art to enable the rapid elimination of bubbles formed during the preparation and application of two-component compositions comprising a polyol component and a polyisocyanate component.

The anti-bubbling agent may be any anti-bubbling agent usually used in such two-component compositions.

For example, the anti-bubbling agent may be selected from zeolites (non-surface treated). In particular, the anti-bubbling agent may be a synthetic zeolite of type A, X and/or Y, preferably having a pore size comprised between 3 Å and 5 Å, more preferably 3 Å.

The anti-bubbling agent content may be up to 5 % by weight with respect to the total weight of the composition according to the invention, preferably between 0.5% and 3 % by weight.

### Other features of the composition according to the invention

Advantageously, the volume ratio of component A with respect to component B is comprised between 0.25 and 4, preferably between 0.5 and 2, more preferably between 0.8 and 1.2, for example equal to 1.0.

According to an embodiment, the composition according to the invention comprises:
- between 3 % and 15 % by weight of at least one polyol P having a functionality of at least 4 in the component A, with respect to the total weight of component A,
- between 3 % and 15 % by weight of at least one polyol P' (different from the polyol P) in component A, with respect to the total weight of component A,
- between 5 % and 25 % by weight of at least one polyisocyanate in component B, with respect to the total weight of component B,
- between 55 % and 94 % by weight of at least one thermally conductive filler selected from metal silicates, metal oxides, metal hydroxides, metal and metalloid nitrides, metal and metalloid carbides, metallic fillers, graphites, and mixtures thereof in component A, with respect to the total weight of component A,
- between 55 % and 94 % by weight of at least one thermally conductive filler selected from metal silicates, metal oxides, metal hydroxides, metal and metalloid nitrides, metal and metalloid carbides, metallic fillers, graphites, and mixtures thereof in component B, with respect to the total weight of component B,
- between 0.01 % and 0.2 % by weight of a crosslinking catalyst in component A, with respect to the total weight of component A, and
- optionally up to 10 % by weight of one or more additives (in component A and/or B) selected from plasticizers, solvents, rheological agents, pigments, adhesion promoters, moisture absorbers, UV stabilizers (or antioxidants), dispersing agents, anti-bubbling agents, and mixtures thereof, with respect to the total weight of the composition according to the invention,
the volume ratio of the component A with respect to the component B being comprised between 0.25 and 4.

Preferably, the composition according to the invention consists essentially of the ingredients mentioned above. By "consists essentially of", it is intended that the composition comprises less than 5 % by weight of ingredients other than the aforementioned ingredients, relative to the total weight of the composition, preferably less than 2% by weight, even more preferably less than 1% by weight.

The ingredients of this embodiment and their particular contents are as described above, including the embodiments and preferred features.

In particular, the composition according to the invention comprises:
- between 4 % and 12 % by weight of at least one polyol P having a functionality of at least 4 in the component A, with respect to the total weight of component A, the at least one polyol P being preferably an ethoxylated and/or propoxylated diamine, said diamine comprising two primary amine groups,
- between 4 % and 12 % by weight of at least one polyol P' (different from the polyol P) in component A, with respect to the total weight of component A, the at least one polyol P' preferably comprising (or consisting of) a mixture of at least one polyether polyol selected from polyethylene glycol, polypropylene glycol and polyethylene glycol-propylene glycol), and at least one polyether polyol selected from ethoxylated and/or propoxylated diols,
- between 10 % and 20 % by weight of at least one polyisocyanate in component B, with respect to the total weight of component B, the at least one polyisocyanate being preferably selected from isocyanurates (monomeric and/or polymeric),
- between 75 % and 85 % by weight of at least one thermally conductive filler selected from metal silicates, metal oxides, metal hydroxides, metal and metalloid nitrides, metal and metalloid carbides, metallic fillers, graphites, and mixtures thereof, preferably selected from aluminum silicates, alumina, aluminum hydroxide, aluminum nitride, boron nitride, zinc oxide, magnesium oxide, and mixtures thereof, in component A, with respect to the total weight of component A,
- between 75 % and 85 % by weight of at least one thermally conductive filler selected from metal silicates, metal oxides, metal hydroxides, metal and metalloid nitrides, metal and metalloid carbides, metallic fillers, graphites, and mixtures thereof, preferably selected from aluminum silicates, alumina, aluminum hydroxide, aluminum nitride, boron nitride, zinc oxide, magnesium oxide, and mixtures thereof, in component B, with respect to the total weight of component B,
- between 0.05 % and 0.11 % by weight of a crosslinking catalyst in component A, with respect to the total weight of component A, the crosslinking catalyst being preferably selected from bismuth carboxylates, zinc carboxylates, and mixtures thereof, and
- optionally between 0.1 % and 5 % by weight of one or more additives (in component A and/or B) selected from plasticizers, solvents, rheological agents, pigments, adhesion promoters, moisture absorbers, UV stabilizers (or antioxidants), dispersing agents, anti-bubbling agents, and mixtures thereof, with respect to the total weight of the composition according to the invention,

the volume ratio of the component A with respect to the component B being comprised between 0.8 and 1.2, and
the composition according to the invention preferably comprising at least one surface treated thermally conductive filler and at least one non-surface treated thermally conductive filler.

Preferably, the composition according to the invention consists essentially of the ingredients mentioned above.

The ingredients of this embodiment and their particular contents are as described above, including the embodiments and preferred features.

Advantageously, the composition according to the invention has a thermal conductivity comprised between 1.0 W/mK and 3 W/mK, preferably between 1.5 W/mK and 2.5 W/mK, for example equal to about 2.0 W/mK.

By "about X", it is intended more or less 10% the value of X.

The thermal conductivity of the composition according to the invention may be measured according to ASTM D5470-12 (2017).

Advantageously, the composition according to the invention has a tensile strength of at least 3.0 MPa, preferably at least 4.0 MPa, more preferably at least 5.0 MPa. For example, the composition according to the invention may have a tensile strength comprised between 3.0 MPa and 20 MPa, preferably between 4.0 MPa and 10 MPa, more preferably between 5.0 MPa and 7 MPa.

The tensile strength of the composition according to the invention may be measured according to ISO 37 (2005), for example as described in Example 1 below.

Advantageously, the composition according to the invention has an open time at 23°C comprised between 15 min and 75 min.

The open time may be defined as the time between the start of the mixing of the components A and B and the start of the curing of the composition, duration during which the user can apply said composition on the substrate(s) to assemble without reduction of adherence.

The open time of the composition according to the invention may be measured as described in Example 1 below.

Advantageously, the composition according to the invention has a setting time interval at 23°C of less than 10 min, preferably less than or equal to 5 min.

The setting time interval corresponds to the difference between the open time and the setting time of the composition. A short setting time interval is advantageous for the user, who does not have to wait for a long time to comfortably manipulate the assembled substrates and store them out of the assembly line.

The setting time of the composition according to the invention may be measured as described in Example 1 below.

Advantageously, the composition according to the invention comprises less than 1 % by weight of diisocyanate monomers with respect to the total weight of the composition, preferably less than 0.5 % by weight.

By "diisocyanate monomer", it is intended a diisocyanate having a molar mass of less than 300 g/mol.

Each of components A and B of the composition according to the invention can be prepared separately by simple mixing of its ingredients. An example of preparation is described in Example 1.

Components A and B can be stored, for example, in a dual cartridge protected from air and humidity. The composition according to the invention can then be obtained by attaching to the dual cartridge, for example, a dynamic mixer.

### Use of the composition according to the invention

The invention also relates to the use of the composition according to the invention as an adhesive, preferably in an assembly intended for the manufacture of a battery, in particular a rechargeable battery for an electric or hybrid car.

The composition according to the invention is as described above, including the embodiments and preferred features.

### Method for bonding substrates

The invention also relates to a method for bonding substrates comprising the steps of:
- coating, on at least one surface of the substrates, of the composition according to the invention as described above (including the embodiments and preferred features), then
- contacting the substrates.

It is understood that, during the coating step and the contacting step, the composition according to the invention is in an uncured state.

The substrates may be identical or different.

The substrates to be implemented are vary varied, and are advantageously made of plastic, metal and/or composite materials, preferably metals.

The plastic material may be a polyolefin, such as polyethylene or polypropylene, or a polyester.

The metal material may be pure or an alloy, for example aluminum or steel.

The composite material may be a reinforced plastic material, such as fiber-reinforced plastic, in particular sheet moulding composite (SMC). The fibers in the fiber-reinforced plastic may be glass, carbon, aramid or basalt fibers, preferably glass fibers. The fiber length may vary between 6 mm and 50 mm. The polymer in the reinforced plastic material may be polyester, polyolefin, epoxy or vinyl ester resin, preferably polyester or polyolefin (such as polyethylene or polypropylene). The polymer in the reinforced plastic material is preferably unsaturated. The reinforced plastic material may comprise other compounds than the fibers and the polymer (such as filler and/or catalyst).

### Article

The invention also relates to an article comprising the (cured or uncured) composition according to the invention as described above (including the embodiments and preferred features), said composition bonding at least two substrates of said article.

The article may be obtained thanks to the method for bonding substrates according to the invention.

The substrates are preferably as described above for the method for bonding substrates according to the invention (including the embodiments and preferred features), in particular the substrates are made of plastic, metal and/or composite materials, preferably metals.

Advantageously, the article is a battery, preferably a rechargeable battery, in particular for an electric or hybrid car.

All the embodiments described above can be combined with each other. In particular, the various aforementioned ingredients in the composition, and in particular the preferred embodiments, can be combined with each other.

The following examples illustrate the invention without limiting it.

### EXAMPLES

### Example 1: Materials and methods

### Materials

The following materials were implemented:
- PPG: polypropylene glycol homopolymer diol having a number average molecular weight of about 1000 g/mol and an OH number of about 110 mg KOH/g;
- DIANOL^{®} 330 (by Arkema): propoxylated 4,4'-isopropylidenediphenol (CAS: 37353-75-6) having a functionality of 2 (i.e. diol), an OH number of about 280 mg KOH/g, and a number average molecular weight of about 400 g/mol;
- Tetrol: propoxylated ethylene diamine having a functionality of 4 (CAS: 25214-63-5), an OH number of about 470 mg KOH/g, and a number average molecular weight of about 480 g/mol;
- BYK-W 903 (by BYK): solution of polyester phosphoric acid ester salt comprising 40% of non-volatile matter (after 10 min at 150°C);
- Pigment: 1,4-di-n-butyl-aminoanthraquinone;
- Borchi^{®} Kat 315 (by Borchers): catalyst based on bismuth neodecanoate;
- Siliporite^{®} SA 1720 (by Arkema): synthetic zeolite type A having a pore size of 3 Å;
- APYRAL^{®} HC 502H (by Nabaltec): aluminum trihydroxide with hydrophobic surface treatment having an average particle size d50 of about 30 µm and a thermal conductivity of about 20 W/mK;
- Al₂O₃: spherical alumina having a mean particle size d50 of 12.5 µm and a thermal conductivity of about 30 W/mK;
- Polyisocyanate: aliphatic polyisocyanate based on hexamethylene diisocyanate trimer (CAS: 28182-81-2; EC: 931-274-8) having an NCO content of about 23% and a hexamethylene diisocyanate monomer content of less than 0.5%;
- PTSI: p-toluenesulfonyl isocyanate;
- Dispersant: polyethylene glycol-functional trimethoxysilane;
- ATH: aluminum trihydroxide (non-surface treated) having an average particle size d50 of about 30 µm and a thermal conductivity of about 20 W/mK.

### Preparation of components A and B

Components A and B were prepared separately by mixing the ingredients indicated in Table 1 below at 50°C in a reactor maintained under constant stirring until homogenization, then vacuum was applied (about 0.2-0.1 bar) to eliminate bubbles.

### Open time

The composition to be tested was applied at 23°C as a bead of about 0.5 cm in diameter on a silicone paper. Then, using the tip of a wooden tongue depressor, the surface of the composition was touched every minute. The open time was determined as the time when the tongue depressor no longer sinks into the bead.

### Setting time

The setting time was determined as the time needed for the composition to have a shear strength of 1 MPa (at 23°C), measured between two INVAR/INVAR stainless steel supports.

The INVAR specimens (25 mm wide x 100 mm long x 1.5 mm thick) were sanded widthwise with P40 abrasive paper (roughness 10-15 microns), degreased with heptane and dried 10 min.

The composition to be tested was applied at 23°C on the sanded end of an INVAR test specimen over an area of 25 mm x 12.5 mm, with a thickness of 0.8 mm. Another test specimen was then placed in the axis of the first on the sanded face and the assembly was strongly pressed (for 6 specimens: weight > 4.5 kg), and maintained under pressure until the tensile test was carried out.

The tensile test was carried out by pulling the two free ends of the assembly with a dynamometer (INSTRON model 1185) at 5 mm/min after a period of time (from the time when the composition was applied to the time when the tensile test was carried out). When this period of time is sufficient to have a breaking force (needed to break the assembly) of 1 MPa, this corresponds to the setting time.

### Setting time interval

The setting time interval of a composition was calculated as the difference between the open time and the setting time.

### Thermal conductivity

Thermal conductivity was measured according to ASTM D5470-12 (2017).

### Tensile strength

The tensile strength was measured according to ISO 37 (2005), at a constant speed equal to 100 mm/min.

In particular, the following conditions were applied:
A standard dumbbell-shaped test specimen, type 2, as illustrated in ISO 37 (2005) was used. The narrow part of the dumbbell used has a length of 20 mm, a width of 4 mm and a thickness of 3 to 4 mm.

To prepare the dumbbell, the composition to be tested is applied in a Teflon mould, and the composition is left to crosslink for 14 days under standard conditions (23°C and 50% relative humidity).

The principle of the measurement consists of stretching a standard test specimen in a tensile machine, whose movable jaw moves at a constant speed equal to 100 mm/min, and recording the tensile strength (in MPa), which is the tensile stress at which the rupture of the specimen occurs.

The measurement was repeated for 5 test specimens, and the mean of the results obtained was calculated.

### Example 2: Compositions according to the invention and comparative compositions

Composition 1 according to the invention was obtained by introducing components A and B into a dual cartridge (protected from air and humidity), then mixing them using a dynamic mixer fixed at the tip of the dual cartridge, at ambient temperature (23°C) with a volume ratio equal to 1.0.

**Table 1: Ingredients in components A and B, the percentages being weight percentages with respect to the total weight of component A or B respectively**

| Ingredient | % in A | Ingredient | % in B |
|---|---|---|---|
| PPG | 6.5 | Polyisocyanate | 16 |
| DIANOL^{®} 330 | 1.7 | PTSI | 0.6 |
| Tetrol | 7.7 | Dispersant | 2.5 |
| BYK-W 903 | 0.5 | ATH | 49 |
| Pigment | 0.02 | Al₂O₃ | 31.9 |
| Borchi^{®} Kat 315 | 0.08 | | |
| Siliporite^{®} SA 1720 | 2 | | |
| APYRAL^{®} HC 502H | 49 | | |
| Al₂O₃ | 32.5 | | |

Composition 2 according to the invention was prepared similarly as composition 1, except that the two components were kept in the dual cartridge for 28 days at 50°C, before being mixed with the dynamic mixer at ambient temperature.

Comparative composition 3 was prepared similarly as composition 1, except that APYRAL^{®} HC 502H, Al₂O₃ and ATH were replaced by surface-treated (hydrophobic) calcium carbonate.

Comparative composition 4 was prepared similarly as composition 3, except that the two components were kept in the dual cartridge for 28 days at 50°C, before being mixed with the dynamic mixer at ambient temperature.

The properties of the compositions 1-4 were then evaluated as described in Example 1 and the results are indicated in Table 2.

**Table 2: Properties of compositions 1-4**

| **Composition** | **1 (inv.)** | **2 (inv.)** | **3 (comp.)** | **4 (comp.)** |
|---|---|---|---|---|
| Open time (min) | 25 | 30 | 18 | 19 |
| Setting time (min) | 28 | 33 | 28 | 30 |
| Setting time interval (min) | 3 | 3 | 10 | 11 |
| Thermal conductivity (W/mK) | 2 | 2 | 0.8 | 0.8 |
| Tensile strength (MPa) | 5.3 | 5.4 | 4.5 | 4.4 |

Composition 1 according to the invention makes it possible to have a good balance between open time and setting time. In particular, composition 1 has an open time of 25 min (i.e. once the composition is applied with the dual cartridge, the user has 25 min to bond the substrates without reduction of adherence) and a setting time of 28 min (i.e. once the composition is applied, 28 min are needed to comfortably manipulate the assembly), corresponding to a setting time interval of only 3 min. Therefore, a long time is available, for example on an assembly line, to bond the substrates once the composition is applied, and the bonded substrates can be comfortably manipulated shortly after the end of the open time, so that the bonded substrates can be stored out of the assembly line. Composition 1 also have a good thermal conductivity and a high tensile strength, which makes it possible to use it as an adhesive for battery assemblies.

Furthermore, even after a long storage time above room temperature, the properties of the composition according to the invention are maintained. In particular, composition 2 according to the invention has a slightly longer open time (which is beneficial) than composition 1, while keeping a setting time interval of 3 minutes, and maintaining the same thermal conductivity and tensile strength.

However, when the thermally conductive fillers are replaced by surface-treated calcium carbonate (comparative compositions 3 and 4), the open time significantly decreases while the setting time interval significantly increases.

Consequently, the compositions according to the invention are advantageously adapted for assembly lines, which require both a long open time and a short setting time interval. Furthermore, the compositions according to the invention have a good thermal conductivity and a high tensile strength, which makes them suitable for battery assemblies.

## Claims

1. A two-component thermally conductive composition comprising:
- a component A comprising:
∘ at least one polyol P having a functionality of at least 4, and
∘ at least one thermally conductive filler; and
- a component B comprising:
∘ at least one polyisocyanate, and
∘ at least one thermally conductive filler;
wherein the at least one thermally conductive filler in each of components A and B is selected from metal silicates, metal oxides, metal hydroxides, metal and metalloid nitrides, metal and metalloid carbides, metallic fillers, graphites, and mixtures thereof.

2. The two-component thermally conductive composition according to claim 1, wherein the at least one polyol P is selected from polyester polyols, polyether polyols, and mixtures thereof, preferably from polyether polyols.

3. The two-component thermally conductive composition according to claim 2, wherein the polyether polyol is an ethoxylated and/or propoxylated diamine, said diamine comprising two primary amine groups.

4. The two-component thermally conductive composition according to any one of claims 1 to 3, wherein the component A further comprises at least one polyol P', which is different from the polyol P.

5. The two-component thermally conductive composition according to claim 4, wherein the at least one polyol P' comprises a polyether polyol being a polyoxyalkylene.

6. The two-component thermally conductive composition according to claim 4 or 5, wherein the at least one polyol P' comprises a polyether polyol being an ethoxylated and/or propoxylated diol.

7. The two-component thermally conductive composition according to any one of claims 1 to 6, wherein the at least one polyisocyanate is selected from biurets, isocyanurates, adducts with polyol, and mixtures thereof, preferably from isocyanurates, the at least one polyisocyanate being monomeric and/or polymeric.

8. The two-component thermally conductive composition according to any one of claims 1 to 7, wherein at least one of the thermally conductive fillers in the composition is a surface treated thermally conductive filler and at least one of the thermally conductive fillers in the composition is a non-surface treated thermally conductive filler.

9. The two-component thermally conductive composition according to any one of claims 1 to 8, wherein the at least one thermally conductive filler in each of components A and B is selected from aluminum silicates, alumina, aluminum hydroxide, aluminum nitride, boron nitride, zinc oxide, magnesium oxide, and mixtures thereof.

10. The two-component thermally conductive composition according to any one of claims 1 to 9, wherein the total content of the at least one thermally conductive filler in each of components A and B is comprised between 55 % and 94 % by weight with respect to the total weight of each of components A and B respectively.

11. The two-component thermally conductive composition according to any one of claims 1 to 10, wherein the component A comprises a crosslinking catalyst.

12. The two-component thermally conductive composition according to claim 11, wherein the crosslinking catalyst content in component A is comprised between 0.01 % and 0.2 % by weight with respect to the total weight of component A.

13. Use of the two-component thermally conductive composition according to any one of claims 1 to 12 as an adhesive, preferably in an assembly intended for the manufacture of a battery.

14. Method for bonding substrates comprising the steps of:
- coating, on at least one surface of the substrates, of the two-component thermally conductive composition according to any one of claims 1 to 12, then
- contacting the substrates.

15. Article comprising the two-component thermally conductive composition according to any one of claims 1 to 12, said composition bonding at least two substrates of said article.
